# EUROPEAN PATENT APPLICATION

(11) **EP 1 762 739 A1**
(43) Date of publication of application: **14.03.2007**
(21) Application number: 05726626.4
(22) Date of filing: 17.03.2005
(51) Int. Cl.: F16D 35/02, F01P 7/08

(54) **DEVICE AND METHOD FOR CONTROLLING VARIABLE INPUT/OUTPUT SPEED RATIO CLUTCH**

(30) Priority: 08.06.2004 JP 2004169672
(71) Applicant: Shin Caterpillar Mitsubishi Ltd., Tokyo 158-8530 (JP)
(72) Inventor: HAYASHI, Yoshihiko;, -chome, Setagaya-ku, Tokyo 1588530; (JP)
(74) Representative: Böck, Bernhard
(86) International application number: PCT/JP2005/004766
(87) International publication number: WO 2005/121588

(57) **Abstract**

The present invention relates to a control apparatus for an input-output number-of-revolutions ratio variable clutch and control method for an input-output number-of-revolutions ratio variable clutch, capable of executing effective cooling control corresponding to an engine state.

This control apparatus includes a clutch 7 capable of varying an input-output number-of-revolutions ratio, an input side of which is connected to an engine 8 and an output side of which is connected to a cooling fan, first temperature detecting means 13 for detecting an outside air temperature Ta, second temperature detecting means 11, 12 for detecting engine-related liquid temperatures Tw, To and control means 4 for, upon receipt of these temperature information, changing the input-output number-of-revolutions ratio of the clutch 7. The control means 4 has a main control unit 53 which determines one of rotation speeds of the fan 6 required with respect to the outside air temperature Ta and the engine-related liquid temperatures Tw, To according to a condition of the engine-related liquid temperatures Tw, To and outputs a control signal so that a rotation speed of the fan 6 reaches this required fan rotation speed.

This arrangement is capable of implementing the effective cooling control corresponding to an engine state.

## Description

### [Technical Field]

The present invention relates to a control apparatus and control method for an input-output number-of-revolutions ratio variable clutch, which is made to control the ratio between input number-of-revolutions and output number-of-revolutions of a cooling fan driven by an engine.

### [BACKGROUND ART]

So far, in a cooling device made to air-cool the cooling water or working fluid of an engine by using a cooling fan, there has been developed a control apparatus for controlling the number of revolutions of the cooling fan.
For example, Patent Document 1 discloses an arrangement in which, in a working fluid temperature cooling device for a hydraulic pump driven by an engine, a working fluid temperature is detected by a temperature sensor and a cooling fan is rotated at an appropriate number of revolutions of the cooling fan which can provide a cooling capacity corresponding to the detection value. This arrangement can provide the number of revolutions of a cooling fan corresponding to a high temperature for achieving the appropriate cooling even in the case of a high-temperature working fluid and a high flow rate, and can suppress the number of revolutions of the cooling fan to reduce generated noise in the case of a low need for the cooling because the working fluid is in a low-temperature condition.

In addition, in a cooling device designed to introduce cooling water into a radiator for cooling the radiator by an engine driven cooling fan, there has been developed a device in which a clutch varying an engagement state depending upon a variation of ambient temperature is interposed between the engine and the cooling fan. In the case of such a technique, for example, a bimetal or the like is employed for the detection of the ambient temperature and, in a state where the ambient temperature around the clutch is lower than a predetermined temperature, the clutch is left released from the engagement state and the driving force inputted from the engine is not transferred to the cooling fan. On the other hand, if the ambient temperature around the clutch exceeds the predetermined temperature, the engagement of the clutch takes place so that the driving force inputted from the engine is transferred to the cooling fan so as to rotate the cooling fan. Moreover, with such an arrangement, the operation of the cooling fan can be controlled according to the ambient temperature to achieve the appropriate cooling.
Patent Document 1 : Japanese Patent Laid-Open No. 2002-61611

### DISCLOSURE OF THE INVENTION

### Problems to be Solved by the Invention

However, the technique disclosed in Patent Document 1 and the above-mentioned latter technique cannot achieve the effective cooling control suitable for the engine condition. For example, since the ambient temperature around the clutch varies greatly due to not only the variation of the outside air temperature but also the exhaust heat from various types of devices such as an engine and a hydraulic pump, when the clutch ambient temperature is used as an index of the temperature of cooling air for cooling the radiator, depending upon the location of the clutch, difficulty can be experienced in cooling the radiator appropriately.

In addition, for example, even in a case which the ambient temperature (or the temperature of cooling air) around the clutch is low, depending upon the load states of the engine and the hydraulic pump, it is also considered that the temperature of the engine cooling water or the working fluid temperature of the hydraulic pump increases so that the cooling by the cooling fan becomes necessary. Still additionally, even in a case in which the working fluid pressure of the hydraulic pump is not in a very high temperature condition, for example, if the engine is driven under the blazing sun, there is a need to operate the cooling fan.

As described above, in the case of the control of the cooling fan, it is considered that the control on the number of revolutions according to only the ambient temperature or working fluid temperature of the hydraulic pump cannot provide a sufficient cooling performance and, hence, minuter control is needed.
The present invention has been developed in consideration of these problems, and it is an object of the invention to provide a control apparatus and control method for an input-output number-of-revolutions ratio variable clutch, capable of implementing the effective cooling control suitable for an engine state.

### MEANS FOR SOLVING THE PROBLEMS

For achieving the above-mentioned purpose, a control apparatus for an input-output number-of-revolutions ratio variable clutch (claim 1) according to the present invention is characterized by comprising a clutch capable of varying an input-output number-of-revolutions ratio, an input side of which is connected to an engine and an output side of which is connected to a cooling fan, first temperature detecting means for detecting an outside air temperature, second temperature detecting means for detecting a liquid temperature related to the engine and control means for, upon receipt of temperature information from the first temperature detecting means and the second temperature detecting means, changing the input-output number-of-revolutions ratio of the clutch to control a rotating state of the cooling fan, and the control means includes amain control unit for, upon receipt of the engine-related liquid temperature detected by the second temperature detecting means, determining one of a rotation speed of the cooling fan required with respect to the outside air temperature and a rotation speed of the cooling fan required with respect to the engine-related liquid temperature on the basis of a condition on the engine-related liquid temperature and outputting a control signal so that a rotation speed of the cooling fan reaches the required fan rotation speed.

Preferably, a hydraulic pump is connected to the engine and the cooling fan is made to cool cooling water of the engine and working fluid of the hydraulic pump and the second temperature detecting means is made as means for detecting at least one of a temperature of the cooling water of the engine and a temperature of the working fluid of the hydraulic pump (claim 2).
In addition, preferably, the control means includes comparison means for, upon receipt of temperature information on the engine-related liquid temperature, making a comparison between the engine-related liquid temperature and a set value set in advance and, when the comparison means makes a judgment that the engine-related liquid temperature is lower than the set value, the main control unit determines a first required fan rotation speed required with respect to the outside air temperature and, when the comparison means makes a judgment that the engine-related liquid temperature is equal to or higher than the set value, the main control unit determines a second required fan rotation speed required with respect to the engine-related liquid temperature (claim 3).

Still additionally, preferably, the control means includes a first storage unit for storing a rotation speed characteristic of the cooling fan required with respect to the outside air temperature and a second storage unit for storing a rotation speed characteristic of the cooling fan required with respect to the engine-related liquid temperature (claim 4).
Yet additionally, preferably, the main control unit determines the cooling fan rotation speed by preferentially making a judgment on a condition of the engine-related liquid temperature detected by the second temperature detecting means over a condition of the outside air temperature detected by the first temperature detecting means (claim 5).

Moreover, preferably, the clutch is made as an electronic control viscous clutch (claim 6).
Furthermore, a control apparatus for an input-output number-of-revolutions ratio variable clutch (claim 7) according to the present invention is characterized by comprising an electronic control viscous clutch capable of varying an input-output number-of-revolutions ratio, an input side of which is connected to an engine mounted in a construction machine and an output side of which is connected to a fan made to cool cooling water of the engine and working fluid of a hydraulic pump driven by the engine, an outside temperature sensor for detecting an outside air temperature, a fluid temperature sensor for detecting a working fluid temperature of the hydraulic pump, a cooling water temperature sensor for detecting a cooling water temperature of the engine, and a controller for, upon receipt of temperature information from the outside air temperature sensor, the fluid temperature sensor and the cooling water temperature sensor, changing an input-output number-of-revolutions ratio of the clutch to control a rotation state of the cooling fan, and the controller includes a first memory for storing a rotation speed characteristic of the cooling fan required with respect to the outside air temperature, a second memory for storing a rotation speed characteristic of the cooling fan required with respect to the engine cooling water temperature, a third memory for storing a rotation speed characteristic of the cooling fan required with respect to the hydraulic pump working fluid temperature, comparison means for, upon receipt of temperature information from the cooling water temperature sensor and the fluid temperature sensor, making a comparison between the engine cooling water temperature and a first set value and making a comparison between the hydraulic pump working fluid temperature and a second set value, and a main control unit for, when the comparison means indicates that the engine cooling water temperature is lower than the first set value and the hydraulic pump working fluid temperature is lower than the second set value, determining a corresponding required fan rotation speed from the first memory and, when the engine cooling water temperature is equal to or higher than the first set value, determining a corresponding required fan rotation speed from the second memory and, when the hydraulic pump working fluid temperature is equal to or higher than the second set value, determining a corresponding required fan rotation speed from the third memory and for outputting a control signal so that a rotation speed of the cooling fan reaches the above-mentioned required fan rotation speed.

Preferably, the main control unit clips upper limits of the required fan rotation speed required with respect to the outside air temperature and the cooling fan rotation speed required with respect to the engine-related liquid temperature for making a restriction (claim 8).
Furthermore, a control method for an input-output number-of-revolutions ratio variable clutch (claim 9) according to the present invention is characterized in that, in an arrangement using a clutch capable of varying an input-output number-of-revolutions ratio, an input side of which is connected to an engine and an output side of which is connected to a cooling fan, first temperature detecting means for detecting an outside air temperature, second temperature detecting means for detecting a liquid temperature related to the engine and control means for, upon receipt of temperature information from the first temperature detecting means and the second temperature detecting means, changing the input-output number-of-revolutions ratio of the clutch to control a rotation of the cooling fan, the engine-related liquid temperature detected by the second temperature detecting means is received, and one of a rotation speed of the cooling fan required with respect to the outside air temperature and a rotation speed of the cooling fan required with respect to the engine-related liquid temperature is determined according to a condition on the engine-related liquid temperature and a control signal is outputted so that a rotation speed of the cooling fan reaches this required fan rotation speed.

Still furthermore, in accordance with the present invention, a control method for an input-output number-of-revolutions ratio variable clutch (claim 10) capable of executing variable control on an input-output number-of-revolutions ratio, an input side of which is connected to an engine and an output side of which is connected to a cooling fan, is characterized in that, in an arrangement using control means carrying out at least two types of control for determining a rotation speed of the cooling fan on the basis of an outside air temperature and for determining a rotation speed of the cooling fan on the basis of an engine-related liquid temperature, the outside air temperature is detected and the engine-related liquid temperature is detected and, through the use of the control means, the control based on the engine-related liquid temperature is preferentially executed over the control based on the outside air temperature.

Although it is preferable that the outside air temperature is an outside air temperature around a machine body, it is also appropriate that it is an outside air temperature around the engine, or that it is an ambient temperature of the engine.

### EFFECT OF THE INVENTION

With a control apparatus for an input-output number-of-revolutions ratio variable clutch and control method for an input-output number-of-revolutions ratio variable clutch (claims 1 and 9) according to the present invention, the input-output number-of-revolutions ratio of the clutch is controllable by referring to both the outside air temperature and the engine-related liquid temperature, which can achieve appropriate cooling control. Moreover, since the determination of the required fan rotation speed is made according to a condition on the engine-related liquid temperature, it is possible to carry out the effective cooling control suitable for an engine state.

In addition, a control apparatus for an input-output number-of-revolutions ratio variable clutch (claim 2) according to the present invention can suitably set the required cooling performance (rotation speed of the cooling fan) of the cooling fan.
Still additionally, a control apparatus for an input-output number-of-revolutions ratio variable clutch (claim 3) according to the present invention can accurately set the magnitude of the number of revolutions of the cooling fan to be outputted from the clutch, according to the magnitude of the required cooling performance of the cooling fan.

Yet additionally, with a control apparatus for an input-output number-of-revolutions ratio variable clutch (claim 4) according to the present invention, since a storage unit is provided which stores the rotation speed characteristic of the cooling fan, the flexible setting of a required fan rotation speed is feasible.
Moreover, with a control apparatus for an input-output number-of-revolutions ratio variable clutch and control method for an input-output number-of-revolutions ratio variable clutch (claims 5 and 10) according to the present invention, the influence of external factors such as the weather or working environments is suppressible, thereby enhancing the cooling effect of the cooling fan.

Still moreover, with a control apparatus for an input-output number-of-revolutions ratio variable clutch (claim 6) according to the present invention, since the clutch control is carried out with an electronic control viscous clutch, the accurate implementation of the clutch input-output number-of-revolutions ratio control is feasible with high response.
Yet moreover, a control apparatus for an input-output number-of-revolutions ratio variable clutch (claim 7) according to the present invention can control the clutch input-output number-of-revolutions ratio by referring to an outside air temperature, an engine cooling water temperature and a hydraulic pump working fluid temperature. In addition, since the rotation speed of the cooling fan is set according to the conditions on the engine cooling water temperature and the hydraulic pump working fluid temperature, the effective cooling control based on not only an outside air temperature but also an engine state is executable with accuracy.

Furthermore, the magnitude of the number of revolutions of the cooling fan to be outputted from the clutch can accurately be set according to the magnitude of the required cooling performance of the cooling fan and, because of the employment of a memory for storing fan rotation speed characteristic, the flexible setting of the magnitude of the required cooling characteristic becomes feasible, thereby enabling the minute optimum control under specified conditions.
Still furthermore, with a control apparatus for an input-output number-of-revolutions ratio variable clutch (claim 8) according to the present invention, because of the restriction on the upper limit of the required fan rotation speed, it is possible to suppress the noises stemming from the rotations of the cooling fan.

### BRIEF DESCRIPTION OF THE DRAWINGS

[FIG. 1] is an illustrative plan view principally showing an arrangement in an engine room in a construction machine equipped with a control apparatus for an input-output number-of-revolutions ratio variable clutch according to an embodiment of the present invention.
[FIG. 2] is a block diagram showing a functional arrangement of a control apparatus for an input-output number-of-revolutions ratio variable clutch according to an embodiment of the present invention.
[FIG. 3] is a cross-sectional view showing an electronic viscous clutch related to a control apparatus for an input-output number-of-revolutions ratio variable clutch according to an embodiment of the present invention.
[FIG. 4] is an illustration of an arrangement of a cooling fan related to a control apparatus for an input-output number-of-revolutions ratio variable clutch according to an embodiment of the present invention, and is a vertical cross-sectional view showing a state in which the cooling fan is mounted on an electronic viscous clutch.
[FIG. 5] is a control flow illustration for explaining clutch input-output number-of-revolutions ratio control by an input-output number-of-revolutions ratio variable clutch according to an embodiment of the present invention.
[FIGs. 6] are graphic illustrations of cooling fan control characteristics in an input-output number-of-revolutions ratio variable clutch according to an embodiment of the present invention, and FIG. 6(a) is a graph showing a required fan number-of-revolutions characteristic relative to an outside air temperature, FIG. 6(b) is a graph showing a required fan number-of-revolutions characteristic relative to an engine cooling water temperature and FIG. 6(c) is a graph showing a required fan number-of-revolutions characteristic relative to a hydraulic pump working fluid temperature.
[FIG. 7] is a side-elevational view showing the entire arrangement of a construction machine equipped with an input-output number-of-revolutions ratio variable clutch according to an embodiment of the present invention.

### DESCRIPTION OF REFERENCE NUMERALS

- 1: Lower traveling body
- 2: Upper revolving body
- 2A: Cabin
- 2B: Engine room
- 2C: Counter-weight
- 2D: Exhaust port
- 3: Working apparatus
- 4: ECM (Electronic control unit, Control means, Controller)
- 5: Cooling package
- 6: Cooling fan (Fan for cooling)
- 7: Electronic viscous clutch (Clutch)
- 8: Engine
- 9: Hydraulic pump
- 10: Fan pulley
- 11: Cooling water temperature sensor (Second temperature detecting means)
- 12: Fluid temperature sensor (Second temperature detecting means)
- 13: Outside air temperature sensor (First temperature detecting means)
- 14: Engine speed dial switch
- 21: Input shaft
- 22: Input plate
- 22a: Input side spline
- 23: Output plate
- 23a: Output side spline
- 24: Revolving main body
- 25: Space
- 26: Bearing
- 27: Fan attaching hole
- 41: Fin
- 42: Fan attaching bolt
- 43: Fan attaching nut
- 44: Attaching hole
- 45: Inserting hole
- 51: Control mode judgment unit (Comparison means)
- 52: Characteristic storage unit
- 52a: Outside air temperature control handling characteristic storage unit (first storage unit, First memory)
- 52b: Water temperature handling characteristic storage unit (Second storage unit, Second memory)
- 52c: Fluid temperature handling characteristic storage unit (Second storage unit, Third memory)
- 53: Control signal outputting unit (Main control unit)
- 53a: Required fan number-of-revolutions setting unit
- 53b: PWM signal conversion unit

### BEST MODE FOR CARRYING OUT THE INVENTION

### A. Description of Mechanical Arrangement

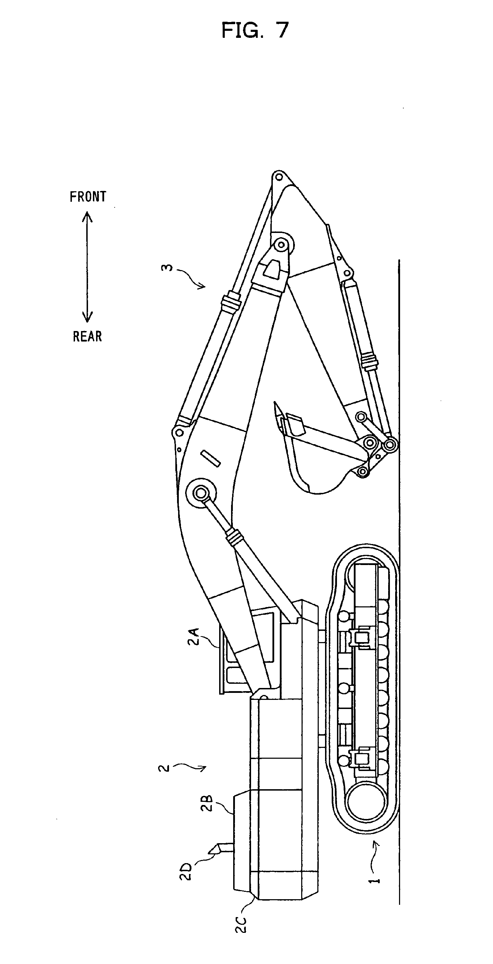

As shown in FIG. 7, a construction machine equipped with a control apparatus for an input-output number-of-revolutions ratio variable clutch according to an embodiment of the present invention is made up of three sections of a lower traveling body 1, an upper revolving body 2 located above the lower traveling body 1 to be rotatable, and a working apparatus 3 provided in the upper revolving body 2 for conducting various operations. Of these sections, in the upper revolving body 2, a cabin 2A functioning as a driver's cab of the construction machine is disposed at a front portion thereof, an engine room 2B is placed in a housing cover in the rear of the cabin 2A, and a counter-weight 2C is located in the rear thereof.

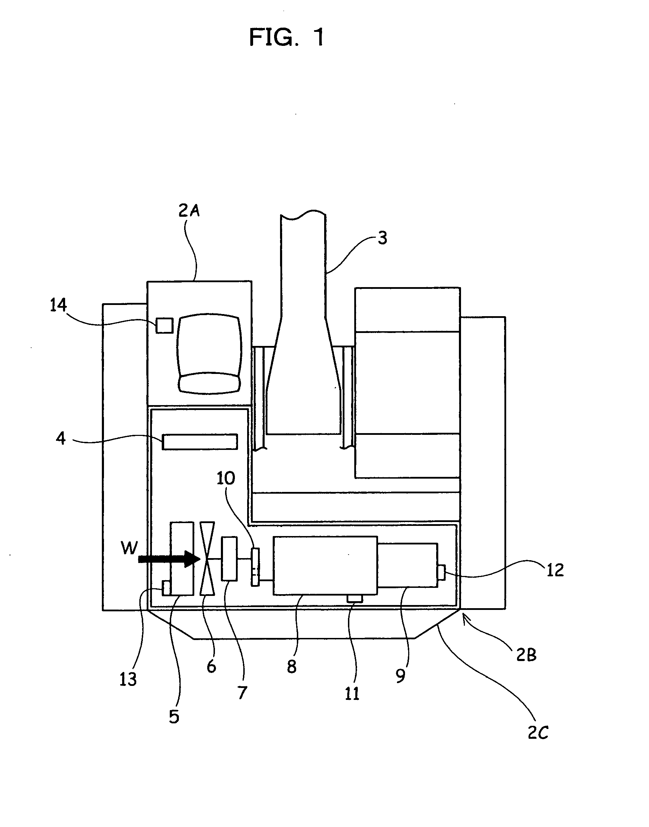

As shown in FIG. 1, in the engine room 2B, an ECM (electronic control unit, control means, controller) 4 is disposed in the rear of the cabin 2A, and in the rear of the vehicle body with respect to the ECM 4, a cooling package 5 having a radiator and an oil cooler, a cooling fan (fan for cooling) 6, an electronic viscous clutch (clutch) 7, an engine 8 and an oil pump 9 are disposed in this order from the left side of the machine body. In this embodiment, the engine 8 is made to drive the hydraulic pump 9 and the hydraulic pump 9 is made to drive the respective devices of the upper revolving body 2 including the lower traveling body 1 and the working apparatus 3 , and with respect to the cooling fan, the engine 8 is designed to drive it directly as mentioned later.

In addition, a cooling water temperature sensor 11 is provided in the engine 8 so as to detect a temperature Tw of the engine cooling water, a fluid temperature sensor 12 is placed in the hydraulic pump 9 to detect a working fluid (hydraulic pump working fluid temperature) To, and an outside air temperature sensor 13 is set in an outside air surface of the cooling package 5 to detect an outside air temperature Ta. Still additionally, a signal having the information on the cooling water temperature Tw, the fluid temperature To and the outside air temperature Ta (in the following description, the signal having these information will sometimes be referred to simply as cooling water temperature Tw, fluid temperature To and outside air temperature Ta), detected by the respective sensors, is outputted to the ECM 4.

Yet additionally, in the cabin 2A, an engine speed dial switch 14 is provided for setting a rotation speed of the engine 8 through an operation by an operator. In this case, a selection from five steps from number 1 to number 5 can be made from a low rotation speed of the engine 8 up to a high rotation speed thereof according to the working contents (for example, working load and others) of the working machine, and a signal having the information on the number of the dial switch (in the following description, the signal having these information will sometimes be referred to simply as dial switch number) selected in this way is outputted to the ECM 4 so that the rotation speed of the engine 8 is controlled to an engine rotation speed Ne corresponding to each of the numbers.

The cooling fan 6 is disposed in a state where its axial direction is directed at a horizontal direction of the machine body, and is made to suck the outside air as cooling wind from an inlet port, not shown, formed in a left-side wall of the engine room 2B. At the passing through the cooling package 5 shown by an arrow W, the sucked cooling air cools the engine cooling water and working fluid flowing in the interiors of the radiator and oil cooler located in the cooling package 5. Moreover, the cooling air passing through the cooling package 5 and discharged from the cooling fan 6 is exhausted from an exhaust port, formed in an upper portion of the engine room 2B, to the exterior of the machine.

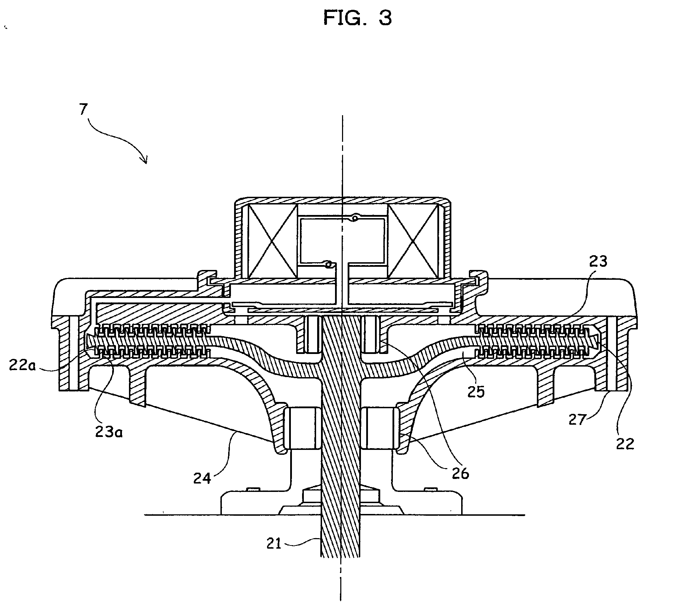

The electronic viscous clutch 7 is an electronic clutch device for carrying out the variable control on the number of revolutions of the cooling fan 6 , which is interposed between the engine 8 and the cooling fan 6.
First, as shown in FIGs. 1 and 3, an input shaft 21 on the input side of the electronic viscous clutch 7 is connected through a pulley 10 to the engine 8, and the output side thereof is connected to the cooling fan 6. Moreover, as shown in FIG. 3, in the interior of the electronic viscous clutch 7, an input plate 22 is placed to extend from the input shaft 21 in a vertical direction. Thus, the input plate 21 is made to rotate in a plane generally perpendicular to the input shaft in accordance with a rotating force inputted from the engine 8.

On the other hand, around the input shaft 21, a revolving main body is placed to slide through a bearing 26 with respect to the input shaft 21, and an output plate 23 arranged side by side in confront relation to the input plate 22 is fixedly secured to the revolving main body 24. In the confronting surfaces of the input plate 22 and the output plate 23, an input side spline 22a and an output side spline 23a are formed to have groove-like concave and convex configurations, respectively, and are rotated with respect to the input shaft 21 with their being in a non-contact state and a predetermined space being maintained between there.

A space 25 defined by the input plate 22 and the output plate 23 is filled with a silicone oil having a predetermined viscosity. This silicone oil is used as a rotational motion transferring medium from the input plate 22 side to the output plate 23 side and is made to circulate in the interior of the electronic viscous clutch 7 through a valve, not shown, provided in the interior of the electronic viscous clutch 7. Moreover, the liquid pressure of the silicone oil put in the confronting surfaces of the input plate 22 and the output plate 23 is controlled in a manner such that the internal flow rate of the silicone oil is increased or decreased by opening or closing the valve, thereby controlling the ratio of the numbers of revolutions transferred from the input plate 22 to the output plate 23 side.

For example, when the valve is closed, the internal flow of the silicone oil is stopped so as to reduce the engagement state between the input side spline 22a and the output side spline 23a, thereby reducing the transfer of the revolving force from the input plate 22 to the output plate 23. Conversely, when the valve is opened, since the silicone oil circulates in the interior of the clutch 7, the engagement state between the input side spline 22a and the output side spline 23a is enhanced, thereby enhancing the transfer of the revolving force from the input plate 22 to the output plate 23, which increases the ratio of the number of revolutions of the revolving main body 24 with respect to the number of revolutions of the input shaft 21.

In addition, the revolving main body 24 has fan attaching holes 27 used for attaching the cooling fan 6. That is, the cooling fan 6 is rotated together with the revolving main body 24 and, when the number-of-revolutions ratio increases in the electronic viscous clutch 7, the ratio of number of revolutions of the cooling fan 6, attached to the revolving main body 24, with respect to the number of revolutions of the input shaft 21 also increases.
The electronic viscous clutch 7 in this embodiment is designed to be capable of controlling the number-of-revolutions ratio transferred from the input plate 22 side to the output 23 side by controlling the internal flow rate of the silicone oil put in the confronting surfaces of the input plate 22 and the output plate 23.

In this connection, in this embodiment, the ECM 4, mentioned later, controls the excitation time of a solenoid, provided in the interior of the electronic viscous clutch 7, in units of very short time (varies the ratio of the excitation and the non-excitation per unit time in a digital manner), thus implementing the PWM (Pulse Width Modulation) which controls the internal flow rate of the silicone oil flexibly. This enables the ratio of the number of revolutions of the revolving main body 24 to the number of revolutions of the input shaft 21 to be controlled without restrictions.

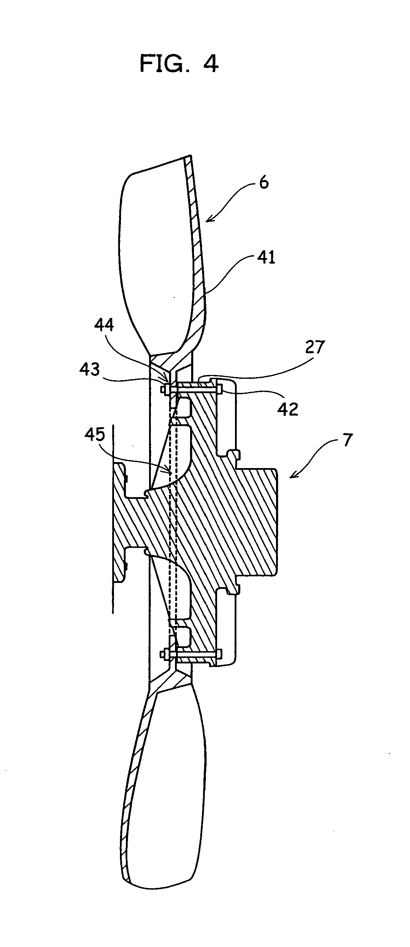

As shown in FIG. 4, the cooling fan 6 has a fin 41 for sucking cooling air from the exterior of the machine by rotation, an inserting hole 45 for the insertion in the revolving main body 24 of the electronic viscous clutch 7 and attaching holes 44 made at the positions corresponding to the fin attaching holes 2 7 at the insertion of the cooling fan 6 into the revolving main body 24, and fan attaching bolts 42 are inserted into the fan attaching holes 27 and the attaching holes 44 and the cooling fan 6 is fixedly secured to the revolving main body 24 by tightening fan attaching nuts 43. In this way, the cooling fan 6 and the revolving main body 24 are rotated in a unitary manner.

### B. Description of Control Arrangement

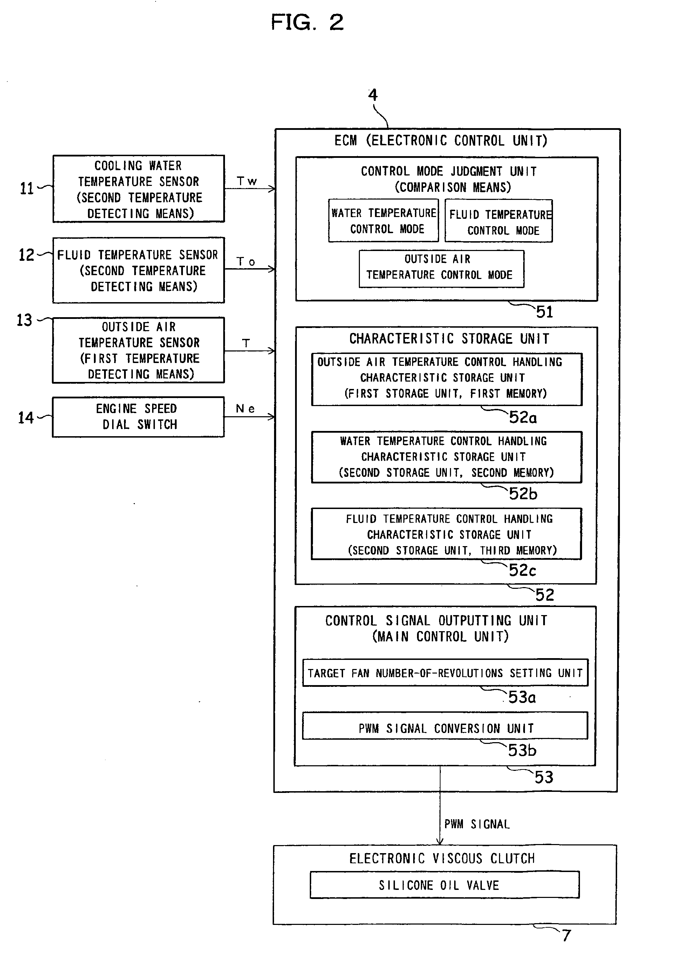

As FIG. 2 shows, the ECM 4 receives the respective input information from a cooling water temperature sensor 11 and a fluid temperature sensor 12 (both are second temperature detecting means), an outside air temperature sensor (first temperature detecting means) 13, and an engine speed dial switch 14. This ECM 4 is an electronic control unit for carrying out the PWM control on the electronic viscous clutch 7 on the basis of the respective input information mentioned above. In this embodiment, as the PWM control, there are selected and implemented three control modes of a water temperature control mode, a fluid temperature control mode and an outside air temperature control mode.

First, the ECM 4 includes a control mode judgment unit (comparison means) 51 for making a judgment as to which of these three control modes is selected, a characteristic storage unit 52 for storing a rotation speed characteristic of the cooling fan 6 and a control signal outputting unit (main control unit) 53 for setting a required fan number-of-revolutions (required fan rotation speed) as a target value when the cooling fan 6 is rotated on the basis of the respective input information and for outputting a PWM signal as a control signal whereby the rotation speed of the cooling fan 6 becomes the required fan number-of-revolutions.

The control mode judgment unit 51 makes a judgment whether or not a cooling water temperature Tw inputted from the cooling water temperature sensor 11 is equal to or higher than a water temperature control start water temperature Tw₁ (first set value) which is a predetermined value set in advance. In a case in which the cooling water temperature Tw is equal to or higher than Tw₁, the water temperature control mode is selected. That is, the predetermined value Tw₁ is set as a lower limit of the cooling water temperature Tw in a state the water temperature control mode is to be selected, and when the cooling water temperature Tw is equal to or higher than Tw₁, for example, even if the outside air temperature or the hydraulic pump working fluid temperature takes a normal temperature, the water control mode is selected.

Moreover, when the cooling water temperature Tw stands at Tw < Tw₁, the control mode judgment unit 51 makes a judgment as to whether or not a fluid temperature To inputted from the fluid temperature sensor 12 is equal to or higher than a fluid temperature control start fluid temperature To₁ (second set value) which is a predetermined value set in advance. If the fluid temperature To ≥ To₁, the fluid temperature control mode is selected. That is, the predetermined value To₁ is set as a lower limit of the fluid temperature To in a state the fluid temperature control mode is to be selected, and if the fluid temperature To is equal to or higher than To₁, for example, even in a case in which the outside air temperature is a normal temperature, the fluid temperature control mode is selected.

Still moreover, If the fluid temperature To < To₁, the control mode judgment unit 51 selects the outside air temperature control mode. Thus, for the control mode selection in the PWM control, the control mode judgment unit 51 preferentially makes a judgment on the magnitude of the cooling water temperature Tw, and secondly makes a judgment on the magnitude of the fluid temperature To and selects the outside air temperature control mode only when both the cooling water temperature Tw and the fluid temperature To are lower than predetermined values.

The reason that a control mode of the PWM control is selected according to a condition on an engine-related liquid temperature (cooling water temperature TW, fluid temperature To) is as follows.
That is, taking note of the engine cooling water and working fluid flowing in the interior of the cooling package 5, the cooling air introduced into the engine room 2B by the cooling fan 6 acts to take the heat away from the engine cooling water and working fluid flowing in the cooling package 5 for accomplishing the cooling of the engine cooling water and the working fluid and, hence, the cooling effect increases as the temperature of the cooling air (i.e., outside air temperature) becomes lower, while the cooling effect reduces as the temperature of the cooling air becomes higher.

Therefore, for obtaining the cooling effect stable without depending on the temperature of cooling air, it is preferable that the number of revolutions of the cooling fan is increased as the temperature of the cooling air becomes higher so as to increase the wind velocity of the cooling air for enhancing the cooling effect.
However, since the temperatures of the engine cooling water and working fluid flowing in the cooling package 5 varies according to the load of the engine 8 (i.e., load of the hydraulic pump 9) or the driving time, even if the cooling effect in the cooling package 5 is stable without depending on the temperature of the cooling wind, the temperatures of the engine cooling water and working fluid rise so that difficulty can be encountered in providing a sufficient cooling effect.

In addition, in comparison with the engine-related liquid temperature, the outside air temperature tends to vary because of being more easily influenced by external factors such as weather and working environments. For this reason, in this embodiment, a judgment is preferentially made with respect to the magnitudes of the engine cooling water temperature Tw and the hydraulic pump working fluid temperature To which are the engine-related fluid temperatures so as to carry out the control based on the cooling water temperature Tw and the fluid temperature To, and the control based on the outside air temperature Ta is executed only when the cooling water temperature Tw and the fluid temperature To are lower than the predetermined values, respectively.

The characteristic storage unit 52 stores a rotation speed characteristic of the cooling fan 6 corresponding to each of the control modes selected by the control mode judgment unit 51 and it is composed of an outside air temperature control handling characteristic storage unit (first storage unit, first memory) 52a corresponding to the outside air temperature control mode, a water temperature control handling characteristic storage unit (second storage unit, second memory) 52b corresponding to the water temperature control mode and a fluid temperature control handling characteristic storage unit (second storage unit, third memory) 52c corresponding to the fluid temperature control mode.

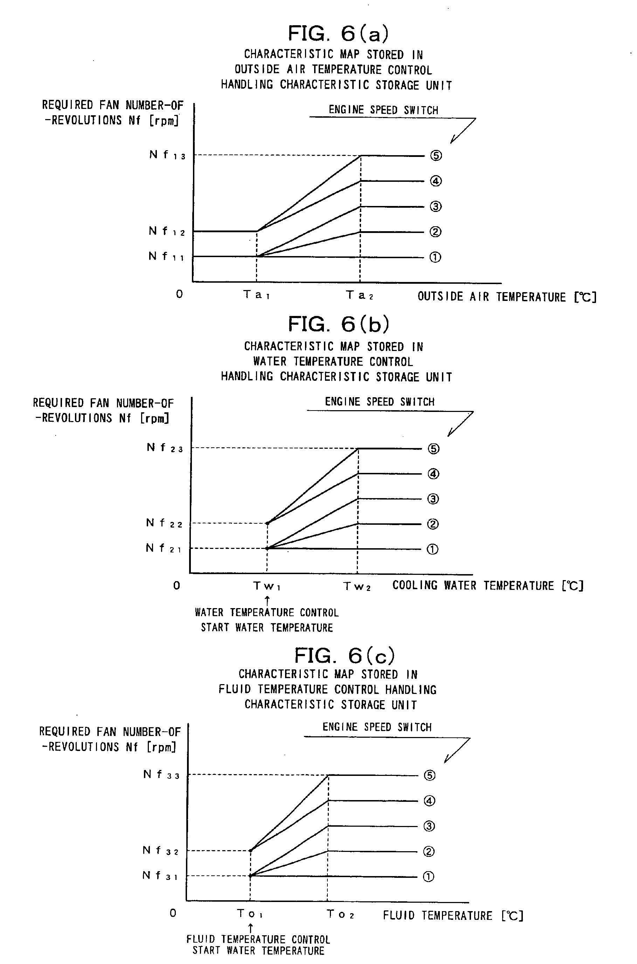

The outside air temperature control handling characteristic storage unit 52a stores the association between an outside air temperature Ta and a required fan number-of-revolutions Nf as a correspondence characteristic map as shown in FIG. 6(a). That is, with the correspondence map stored therein, when an outside air temperature Ta is inputted, the corresponding required fan number-of-revolutions Nf is set as a target value for rotating the cooling fan 6.

The water temperature control handling characteristic storage unit 52b stores the association between a cooling water temperature Tw and a required fan number-of-revolutions Nf of the cooling fan 6 as a correspondence characteristic map as shown in FIG. 6(b), and the fluid temperature control handling characteristic storage unit 52c stores the association between a fluid temperature To and a required fan number-of-revolutions Nf of the cooling fan 6 as a correspondence characteristic map as shown in FIG. 6(c).
With respect to the rotation speed characteristic of the cooling fan 6 to be set in the outside air temperature control mode, as shown in FIG. 6(a), when the selected number of the engine speed dial switch 14 is the number 1, the required fan number-of-revolutions Nf is set at Nf₁₁ irrespective of the value of the outside air temperature Ta. Moreover, as the number of the engine speed dial switch 14 becomes larger (with an increase of the engine speed Ne), the required fan number-of-revolutions Nf is set at a greater value.

Moreover, in a case in which the selected numbers of the engine speed dial switch 14 are numbers 2 and 3, when the outside air temperature Ta is lower than a predetermined value Ta₁, the required fan number-of-revolutions Nf is set at Nf₁₁ and, on the other hand, if the outside air temperature is in a range equal to or higher than the predetermined value Ta₁ but lower than a predetermined value Ta₂, the required fan number-of-revolutions is set at a larger value so as to correspond to an increase in the outside air temperature. Still moreover, when the outside air temperature Ta is in a range equal to or higher than the predetermined value Ta₂, the required fan number-of-revolutions does not further increase beyond that, and it is set as a constant value with respect to a variation of the outside air temperature Ta.

In addition, in a case in which the selected numbers of the engine speed dial switch 14 are numbers 4 and 5, almost likewise, when the outside air temperature Ta is lower than the predetermined value Ta₁, the required fan number-of-revolutions Nf is set at Nf₁₂ (Nf₃₁ < Nf₃₂), and if the outside air temperature Ta is in a range equal to or higher than the predetermined value Ta₁ but lower than the predetermined value Ta₂, the required fan number-of-revolutions Nf is set at a larger value so as to correspond to an increase in the outside air temperature Ta. Still additionally, when the outside air temperature Ta is in a range equal to or higher than the predetermined value Ta₂, the required f an number-of-revolutions Nf does not further increase beyond that , and it is set as a constant value with respect to a variation of the outside air temperature. For example, in a case in which the number of the engine speed dial switch 14 is number 5 at which the engine speed Ne reaches a maximum, the maximum value of the required fan number-of-revolutions Nf is clipped at a predetermined value Nf₁₃.

Thus, even if the outside air temperature Ta stands at the predetermined value Ta₂ or more, the upper limit value of the required fan number-of-revolutions Nf is restricted so as to suppress the number of revolutions of the cooling fan 6 without setting the excessively large number of revolutions corresponding to that outside air temperature Ta, thereby enabling the reduction of generated noise.
Moreover, as well as the rotation speed characteristic of the cooling fan 6 to be set in the water temperature control mode and the fluid temperature control mode, as shown in FIGs. 6(b) and 6(c), when the selected number of the engine speed dial switch 14 is number 1, the required fan number-of-revolutions Nf is set at Nf₂₁ or Nf₃₁ at all times, and as the number of the engine speed dial switch 14 becomes larger (the engine speed Ne increases), the required fan number-of-revolutions Nf is set at a larger value. Still moreover, in a case in which the cooling water temperature Tw is in a range equal to or more than the predetermined value Tw₂, the required fan number-of-revolutions Nf does not further increase beyond that, but it is set as a constant value with respect to the variation of the cooling water temperature Tw and, likewise, in a case in which the fluid temperature To is in a range equal to or more than the predetermined value To₂, the required fan number-of-revolutions Nf does not further increase beyond that, but it is set as a constant value with respect to the variation of the fluid temperature To.

Yet additionally, in a case in which the number of the engine speed dial switch 14 is number 5 at which the engine speed Ne reaches a maximum, the maximum value of the required fan number-of-revolutions Nf is clipped at a predetermined value Nf₂₃ in the water temperature control mode and is clipped at a predetermined value Nf₃₃ in the fluid temperature control mode.
Thus, even if the cooling water temperature Tw and the fluid temperature To stand at the predetermined values Tw₂ or more and To₂ or more, respectively, the upper limit value of the required fan number-of-revolutions Nf is restricted so as to suppress the number of revolutions of the cooling fan 6 without setting the excessively large number of revolutions, thereby enabling the reduction of generated noise.

Since the water temperature control mode is selected only when the control mode judgment unit 51 shows that the cooling water temperature Tw is equal to or higher than the predetermined value Tw₁ (first set value), also in the correspondence map on the required fan number-of-revolutions Nf, as shown in FIG. 6(b), the required fan number-of-revolutions Nf is set only when the water temperature Tw is in a range equal to or higher than the predetermined value Tw₁. Likewise, also with respect to the fluid temperature control mode, as shown in FIG. 6(c), the required fan number-of-revolutions Nf is set only when the fluid temperature To is in a range equal to or higher than To₁.

The control signal outputting unit 53 is composed of a required fan number-of-revolutions setting unit 53a for setting the required fan number-of-revolutions as a required value at which the cooling fan 6 is to be rotated, and a PWM signal conversion unit 53c for outputting a PWM signal as a control signal whereby the rotation speed of the cooling fan 6 reaches the required fan number-of-revolutions.
The required fan number-of-revolutions setting unit 53a is for setting a required fan number-of-revolutions as a target value of the rotation speed of the cooling fan 6 on the basis of the control mode subjected to the judgment in the control mode judgment unit 51 and the above-mentioned respective correspondence map stored in the characteristic storage unit 52.

The PWM signal conversion unit 53b calculates an input-output number of revolutions ratio in the electronic viscous clutch 7 for rotating the cooling fan 6 at a required fan number-of-revolutions Nf on the basis of the required fan number-of-revolutions Nf set by the required fan number-of-revolutions setting unit 53a and the engine speed Ne corresponding to the number selected by the engine speed dial switch 14, and outputs, to the electronic viscous clutch 7, a PWM signal as an opening-degree control signal to a silicone oil valve 36 for achieving this input-output number-of-revolutions ratio.

### C. Description of Control Flow

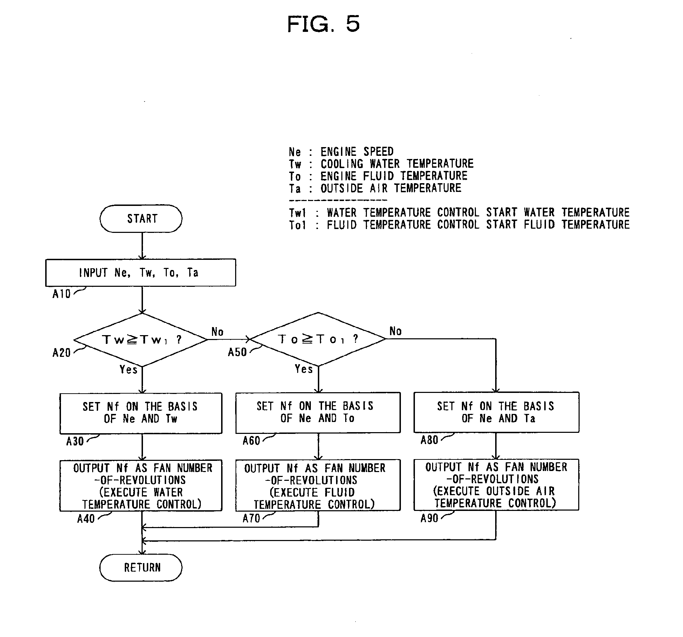

Secondly, referring to a control flow shown in FIG. 5, a description will be given of concrete control in this input-output number-of-revolutions ration variable clutch control apparatus. This flow is properly called as a subroutine at every predetermined cycle (for example, cycle synchronized with a cycle of information detection by the cooling water temperature sensor 11, the fluid temperature sensor 12, the outside air temperature sensor 13 or the like) in the ECM 4.

First of all, at a step A10, to the ECM 4, there are inputted an engine speed Ne corresponding to the number selected by the engine speed dial switch 14, a cooling water temperature Tw detected by the cooling water temperature sensor 14, a hydraulic pump working fluid temperature To detected by the fluid temperature sensor 12 and an outside air temperature Ta detected by the outside air temperature sensor 13.
Following this, at a step A20, the control mode judgment unit 51 makes a judgment as to whether or not the cooling water temperature Tw is equal to or higher than the predetermined value Tw₁. If Tw ≥ Tw₁, the water temperature control mode is selected as the PWM control, and the control flow advances to a step A30 and following steps. On the other hand, if Tw < Tw₁, the control flow proceeds to a step A50 for further judgment.

That is, at the step A50, a judgment is made as to whether or not the fluid temperature To is equal to or higher than the predetermined value To₁. If To≥To₁, the fluid temperature control mode is selected as the PWM control, and the control flow goes to a step A60 and following steps. If To < To₁, the outside air temperature control mode is selected as the PWM control, and the control flow advances to a step A80 and following steps.
In a case in which the water temperature control mode is selected at the step A20, at the step A30, a required fan number-of-revolutions Nf is set from the correspondence map shown in FIG. 6(b) on the basis of the cooling water temperature Tw and the number of the engine speed dial switch 14, and the control flow proceeds to a step A40 to output, to the electronic viscous clutch 7, a PWM signal for rotating the cooling fan 6 at the required fan number-of-revolutions Nf. Then, this flow comes to an end.

Moreover, when the fluid temperature control mode is selected at the step A50, at a step A60, a required fan number-of-revolutions Nf is set from the correspondence map shown in FIG. 6(c) on the basis of the fluid temperature To and the number of the engine speed dial switch 14, and the control flow proceeds to a step A70 to output, to the electronic viscous clutch 7, a PWM signal for rotating the cooling fan 6 at the required fan number-of-revolutions Nf. Then, this flow comes to an end.

Still moreover, when the outside air temperature control mode is selected at the step A50, at a step A80, a required fan number-of-revolutions Nf is set from the correspondence map shown in FIG. 6(a) on the basis of the outside air temperature Ta and the number of the engine speed dial switch 14, and the control flow proceeds to a step A90 to output, to the electronic viscous clutch 7, a PWM signal for rotating the cooling fan 6 at the required fan number-of-revolutions Nf. Then, this flow comes to an end.

### D. Advantages and Effects

On the control apparatus for an input-output number-of-revolutions ratio variable clutch according to this embodiment, through the use of the above-described control, when the cooling water temperature Tw detected by the cooling water temperature sensor 11 is equal to or higher than the predetermined value Tw₁, the ECM 4 sets a required fan number-of-revolutions Nf required with respect to the cooling water temperature Tw and outputs a PWM signal for rotating the cooling fan 6 at the required fan number-of-revolutions Nf. Therefore, the cooling fan 6 is controlled to the fan number of revolutions corresponding to the cooling water temperature Tw, thereby enabling the implementation of the cooling control corresponding to the temperature state of the cooling water.

Moreover, when the cooling water temperature is lower than the predetermined value Tw₁, a judgment is made on the basis of the fluid temperature To and, if the fluid temperature To is equal to or higher than the predetermined To₁, the ECM 4 sets a required fan number-of-revolutions Nf required with respect to the fluid temperature To. Therefore, the cooling fan 6 is controlled to the fan number-of-revolutions corresponding to the fluid temperature To, thereby enabling the implementation of the cooling control corresponding to the temperature state of the fluid.
Still moreover, if the fluid temperature To is lower than the predetermined value To₁, the ECM 4 sets a required fan number-of-revolutions Nf required with respect to the outside air temperature Ta. Therefore, the cooling fan 6 is controlled to a fan number-of-revolutions corresponding to the outside air temperature Ta, thereby enabling the implementation of the cooling control corresponding to the temperature state of the outside air.

Thus, since the control is executed by referring to both the outside air temperature and the engine-related liquid temperature, it is possible to carry out the appropriate cooling control suitable for the respective temperature conditions. Moreover, since these control are selected according to the engine-related liquid temperatures (engine cooling water temperature Tw, hydraulic pump working fluid temperature To), it is possible to implement the effective cooling control corresponding to an engine state.

In addition, since the clutch control is implemented using an electronic control viscous clutch, an accurate input-output number-of-revolutions ratio control on the clutch becomes feasible with high response.
Still additionally, since the ECM 4 has the characteristic storage unit 52 for storing a rotation speed characteristic of the cooling fan 6, the required fan rotation speeds can flexibly set as a correspondence map with respect to an engine speed, a cooling water temperature Tw, a fluid temperature To and an outside air temperature Ta, which enables fine control.

Yet additionally, according to this embodiment, in a range where the cooling water temperature Tw is equal to or higher than the predetermined value Tw₂, in a range where the fluid temperature To is equal to or higher than the predetermined value To₂ and in a range where the outside air temperature Ta is equal to or higher than the predetermined value Ta₂, the required fan number-of-revolutions does not further increase beyond that, but it is set at a constant value. This prevents the setting of an excessively large required fan number-of-revolutions and limits the rotation speed of the cooling fan 6, thereby enabling the reduction of generated noise.

### E. Others

Although the embodiments of the present invention have been described above, the present invention is not limited to these embodiments, and it is possible to make all changes which do not constitute departures from the spirit and scope of the invention.
For example, although in the above-described embodiment the cooling fan 6 is made to cool the engine cooling water and hydraulic pump working fluid passing through the cooling package 5, it is also acceptable that the cooling fan 6 further cools other auxiliaries. Moreover, although in the above-described embodiment the cooling package 5 includes the radiator and the oil cooler, it is also acceptable that these are individually provided, and that a cooling fan 6 is used for to each of the radiator and the oil cooler. In this case, it is also possible that the same control is executed for each of the cooling fan (for example, the same control signal is outputted through control means to each of the cooling fans, or other manners), or that the cooling fans are individually controlled (for example, different control signals are outputted through control means to the individual cooling fans, or other manners).

In addition, although in the above-described embodiment the rotation speed of the cooling fan 6 is variable by the electronic control viscous clutch 7, all types of clutches are also acceptable, provided that they can vary the ratio (input-output number-of-revolutions ratio) of the number of revolutions inputted from the engine 8 and the number of revolutions of the cooling fan 6.
Still additionally, although in the above-described embodiment the rotation speed Nf of the cooling fan 6 is determined according to the conditions on the engine cooling water temperature Tw and hydraulic pump working fluid temperature To used as the engine-related liquid temperatures, it is also possible to detect only one of the cooling water temperature Tw and the fluid temperature To.

Yet additionally, although in the above-described embodiment the outside air temperature sensor 13 is made to detect an outside air temperature Ta on an outside air surface of the cooling package 5, in other words, it is made to detect an outside air temperature around a machine body of a construction machine, it is also appropriate to detect an outside air temperature around the engine 8, or to detect an atmospheric temperature in the interior of the engine room 2B or an ambient temperature. For example, in the above-described embodiment, it is considered that, at setting the map characteristic shown in FIG. 6(a), when the influence of the engine ambient temperature is reflected in the fan number-of-revolutions control, the engine ambient temperature is detected as an outside air temperature Ta so as to set a required fan number-of-revolutions Nf corresponding thereto. On the other hand, when the influence on the cooling effect stemming from a variation of the outside air temperature (i.e., temperature variation of cooling wind) is reflected in the fan number-of-revolutions control, as well as the above-described embodiment, the outside air temperature around the machine, i.e., the atmospheric temperature on the external side of the cooling package 5, can be detected as an outside air temperature Ta so as to set a required fan number-of-revolutions Nf corresponding thereto.

Furthermore, although in the above-described embodiment the ECM 4 is designed to have the memories (first memory, second memory, third memory) as the characteristic storage unit 51 storing a characteristic map on rotation speeds of the cooling fan 6, it is also considerable to employ an arrangement in which the ECM 4 does not have these memories. For example, a mathematization is previously made on the characteristic on a rotation speed of the cooling fan 6 required with respect to the inputted outside air temperature Ta and engine-related liquid temperatures Tw, To (for example, a required fan rotation speed is defined as a function of an outside air temperature Ta or engine-related liquid temperatures Tw, To, or other manners) so that the ECM 4 determines a required fan rotation speed on the basis of this mathematical expression. This can provide the advantages and effects equivalent to those in the above-described embodiments.

### INDUSTRIAL APPLICABILITY

Although in the above-described embodiment the present invention is applied as an example to a hydraulic shovel which is a construction machine, the control apparatus for an input-output number-of-revolutions ratio variable clutch according to the present invention is not limited to the hydraulic shovel, but it is also applicable to various types of construction machines and vehicles such as a wheel loader, a crane and others.
In addition, this control apparatus for an input-output number-of-revolutions ratio variable clutch is widely applicable to all control apparatus for clutches, such as, in addition to an electromagnetic clutch, a centrifugal clutch, a wet clutch, a dry clutch and a variable speed clutch of powder clutches, which are used for the number-of-revolutions variable control of an engine cooling fan.

## Claims

**1.** A control apparatus for an input-output number-of-revolutions ratio variable clutch
**characterized by** comprising:
a clutch, capable of varying an input-output number-of-revolutions ratio, an input side of which is connected to an engine and an output side of which is connected to a cooling fan;
first temperature detecting means for detecting an outside air temperature;
second temperature detecting means for detecting a liquid temperature related to said engine; and
control means for, upon receipt of temperature information from said first temperature detecting means and said second temperature detecting means, changing an input-output number-of-revolutions ratio of said clutch to control a rotating state of said cooling fan,
wherein said control means includes a main control unit for, upon receipt of the engine-related liquid temperature detected by said second temperature detecting means, determining one of a rotation speed of said cooling fan required with respect to the outside air temperature and a rotation speed of said cooling fan required with respect to the engine-related liquid temperature on the basis of a condition on the engine-related liquid temperature and outputting a control signal so that a rotation speed of said cooling fan reaches the determined required fan rotation speed.

**2.** The control apparatus for an input-output number-of-revolutions ratio variable clutch according to claim 1 or 2, **characterized in that** a hydraulic pump is connected to said engine,
said cooling fan is made to cool cooling water of said engine and working fluid of said hydraulic pump, and
said second temperature detecting means is made as means for detecting at least one of a temperature of the cooling water of said engine and a temperature of the working fluid of said hydraulic pump.

**3.** The control apparatus for an input-output number-of-revolutions ratio variable clutch according to any one of claims 1 to 3, **characterized in that** said control means includes comparison means for, upon receipt of temperature information on the engine-related liquid temperature, making a comparison between the engine-related liquid temperature and a set value set in advance and,
when said comparison means makes a judgment that the engine-related liquid temperature is lower than the set value, said main control unit determines a first required fan rotation speed required with respect to the outside air temperature and, when said comparison means makes a judgment that the engine-related liquid temperature is equal to or higher than the set value, said main control unit determines a second required fan rotation speed required with respect to the engine-related liquid temperature.

**4.** The control apparatus for an input-output number-of-revolutions ratio variable clutch according to any one of claims 1 to 4, **characterized in that** said control means includes:
a first storage unit for storing a rotation speed characteristic of said cooling fan required with respect to the outside air temperature; and
a second storage unit for storing a rotation speed characteristic of said cooling fan required with respect to the engine-related liquid temperature.

**5.** The control apparatus for an input-output number-of-revolutions ratio variable clutch according to any one of claims 1 to 5, **characterized in that** said main control unit determines the fan rotation speed by preferentially making a judgment on a condition of the engine-related liquid temperature detected by said second temperature detecting means over a condition of the outside air temperature detected by said first temperature detecting means.

**6.** The control apparatus for an input-output number-of-revolutions ratio variable clutch according to claim 1, **characterized in that** said clutch is made as an electronic control viscous clutch.

**7.** A control apparatus for an input-output number-of-revolutions ratio variable clutch, **characterized by** comprising:
an electronic control viscous clutch, capable of varying an input-output number-of-revolutions ratio, an input side of which is connected to an engine mounted in a construction machine and an output side of which is connected to a fan made to cool cooling water of said engine and working fluid of a hydraulic pump driven by said engine;
an outside temperature sensor for detecting an outside air temperature;
a fluid temperature sensor for detecting a working fluid temperature of said hydraulic pump;
a cooling water temperature sensor for detecting a cooling water temperature of said engine; and
a controller for, upon receipt of temperature information from said outside air temperature sensor, said fluid temperature sensor and said cooling water temperature sensor, changing an input-output number-of-revolutions ratio of said clutch to control a rotation state of said cooling fan,
wherein said controller includes:
a first memory for storing a rotation speed characteristic of said cooling fan required with respect to the outside air temperature;
a second memory for storing a rotation speed characteristic of said cooling fan required with respect to the engine cooling water temperature;
a third memory for storing a rotation speed characteristic of said cooling fan required with respect to the hydraulic pump working fluid temperature;
comparison means for, upon receipt of temperature information from said cooling water temperature sensor and said fluid temperature sensor, making a comparison between the engine cooling water temperature and a first set value and making a comparison between the hydraulic pump working fluid temperature and a second set value; and
a main control unit for, when said comparison means indicates that the engine cooling water temperature is lower than the first set value and the hydraulic pump working fluid temperature is lower than the second set value, determining a corresponding required fan rotation speed from said first memory and, when the engine cooling water temperature is equal to or higher than the first set value, determining a corresponding required fan rotation speed from said second memory and, when the hydraulic pump working fluid temperature is equal to or higher than the second set value, determining a corresponding required fan rotation speed from said third memory, and for outputting a control signal so that a rotation speed of said cooling fan reaches said required fan rotation speed.

**8.** The control apparatus for an input-output number-of-revolutions ratio variable clutch according to any one of claims 1 to 6, **characterized in that** said main control unit sets upper limits of the required fan rotation speed required with respect to the outside air temperature and the fan rotation speed required with respect to the engine-related liquid temperature for making a restriction.

**9.** A control method for an input-output number-of-revolutions ratio variable clutch,
**characterized in that**, in an arrangement using a clutch capable of varying an input-output number-of-revolutions ratio, an input side of which is connected to an engine and an output side of which is connected to a cooling fan, first temperature detecting means for detecting an outside air temperature, second temperature detecting means for detecting a liquid temperature related to said engine and control means for, upon receipt of temperature information from said first temperature detecting means and said second temperature detecting means, changing the input-output number-of-revolutions ratio of said clutch to control a rotation of said cooling fan, the engine-related liquid temperature detected by the second temperature detecting means is received, and one of a rotation speed of said cooling fan required with respect to the outside air temperature and a rotation speed of said cooling fan required with respect to the engine-related liquid temperature is determined according to a condition of the engine-related liquid temperature and a control signal is outputted so that a rotation speed of said cooling fan reaches the determined required fan rotation speed.

**10.** A control method for an input-output number-of-revolutions ratio variable clutch capable of executing variable control on an input-output number-of-revolutions ratio, an input side of which is connected to an engine and an output side of which is connected to a cooling fan, **characterized in that**, in an arrangement using control means carrying out at least two types of control for determining a rotation speed of said cooling fan on the basis of the outside air temperature and for determining a rotation speed of said cooling fan on the basis of the engine-related liquid temperature,
the outside air temperature is detected and the engine-related liquid temperature is detected and,
through the use of the control means, the control based on the engine-related liquid temperature is preferentially executed over the control based on the outside air temperature.
